# EUROPEAN PATENT SPECIFICATION

(11) **EP 3 138 323 B1**
(45) Date of publication and mention of the grant of the patent: **02.01.2019**
(21) Application number: 15785662.6
(22) Date of filing: 22.04.2015
(51) Int. Cl.: H04W 36/12, H04B 7/185, H04B 7/212, H04W 36/08, H04W 56/00

(54) **HANDOVER BETWEEN SATELLITES USING A SINGLE MODEM**
HANDOVER ZWISCHEN SATELLITEN MIT VERWENDUNG EINES EINZELMODEMS
TRANSFERT ENTRE SATELLITES AU MOYEN D'UN MODEM UNIQUE

(30) Priority: 27.04.2014 US 201461984788 P
(43) Date of publication of application: 08.03.2017
(73) Proprietor: Novelsat Ltd., 43654 Ra'anana (IL)
(72) Inventor: PELEG, Dan, 38840 Sde Yitzhak (IL); FREEDMAN, Avraham, 67459 Tel Aviv (IL)
(74) Representative: Beck Greener
(86) International application number: PCT/IB2015/052930
(87) International publication number: WO 2015/166383

(56) References cited:
- EP-A1- 1 062 747
- AU-A1- 2006 201 548
- US-A1- 2004 090 935

## Description

The present invention relates generally to satellite communication, and particularly to methods and systems for handover between satellites.

Some satellite communication networks use a constellation of multiple non-geostationary satellites that jointly provide communication services to terrestrial satellite communication terminals or earth stations. From the point of view of a terrestrial terminal or earth station, a given non-geostationary satellite occasionally rises above the horizon, moves across the sky and then sets below the horizon. As such, communication via such a network typically involves tracking the angular positions of satellites, and handing-over from one satellite to another as needed to retain service.

AU-A-2006201548 describes a method for communication comprising in a first earth station that transmits signals to a second earth station via a first satellite, initiating a handover from the first satellite to a second satellite by transmitting the signals via both the first satellite and the second satellite, including transmitting a handover command and a synchronization signal; and in the second earth station, receiving the handover command via the first satellite and in response to the handover command, switching to receive the signals via the second satellite and synchronize to the signal received via the second satellite using the synchronization signal. AU-A-2006201548 also describes a communication system, comprising a first earth station, which is configured to transmit signals via a first satellite, and to initiate a handover from the first satellite to a second satellite by transmitting the signals via both the first satellite and the second satellite, including transmitting a handover command and a synchronization signal; and a second earth station, which is configured to receive the handover command via the first satellite and, in response to the handover command, to switch to receive the signals via the second satellite and to synchronize to the signal received via the second satellite using the synchronization signal.

According to an aspect of the present invention, there is provided a method for communication as described in AU-A-2006201548, characterized in that transmitting the signals comprises buffering payload data in a memory buffer and, in preparation for the handover, generating the signals for transmission by interleaving the buffered payload data, the handover command and the synchronization signal.

In some embodiments, receiving the signals, the handover command and the synchronization signal in the second earth station are performed by a single receive modem, which receives the signals via no more than one of the first and second satellites at any given time. In an embodiment, transmitting the signals includes transmitting the handover command and the synchronization signal with a time separation therebetween, and switching to receive the signals via the second satellite is performed in the second earth station during the time separation, so as to receive the synchronization signal via the second satellite after the switching.

In some embodiments, transmitting the handover command includes reporting one or more parameters of the second satellite, and synchronizing to the signal received via the second satellite includes acquiring the synchronization signal using the reported parameters. The reported parameters may include at least one parameter type selected from a group of types consisting of an identifier, a timing offset, a center frequency, a frequency offset and a phase offset relating to the second satellite.

In another embodiment, transmitting the handover command includes indicating to the second earth station a time at which to switch to receive the signals via the second satellite. In yet another embodiment, the method includes directing an antenna of the second earth station toward the second satellite in response to the handover command.

According to another aspect of the present invention, there is provided a communication system as described in AU-A-2006201548, characterized in that the first earth station is configured to buffer payload data in a memory buffer and, in preparation for the handover, to generate the signals for transmission by interleaving the buffered payload data, the handover command and the synchronization signal.

There is further disclosed herein an earth station including a transmitter and a control unit. The control unit is configured to transmit signals using the transmitter via a first satellite, and to initiate a handover from the first satellite to a second satellite by transmitting the signals using the transmitter via both the first satellite and the second satellite, including transmitting a handover command and a synchronization signal, so as to cause a remote earth station to receive the handover command via the first satellite and, in response to the handover command, to switch to receive the signals via the second satellite and to synchronize to the signal received via the second satellite using the synchronization signal.

There is also disclosed herein an earth station including a receiver and a control unit. The control unit is configured to receive signals using the receiver via a first satellite, including receiving a handover command and a synchronization signal, and, in response to the handover command, to switch to receive the signals using the receiver via the second satellite and to synchronize to the signal received via the second satellite using the synchronization signal.

The present invention will be more fully understood from the following detailed description of the embodiments thereof, taken together with the drawings in which:
Fig. 1 is a block diagram that schematically illustrates a satellite communication system, in accordance with an embodiment of the present invention;
Fig. 2A is a diagram illustrating signal streams in a transmitting earth station, in accordance with an embodiment of the present invention;
Fig. 2B is a diagram illustrating signal streams in a receiving earth station, in accordance with an embodiment of the present invention;
Fig. 3 is a flow chart that schematically illustrates a method for handover between satellites, in accordance with an embodiment of the present invention; and
Fig. 4 is a block diagram that schematically illustrates signal buffering in a transmitting earth station, in accordance with an embodiment of the present invention.

Embodiments of the present invention that are described herein provide improved methods and systems for handover between satellites. The disclosed techniques enable two Earth Stations (ESs) to perform a coordinated and seamless handover process, in which the receiving ES receives no more than one of the satellites at any given time. Thus, the receiving ES may comprise only a single receive modem.

In some disclosed embodiments, a first ES transmits signals to a second ES via a first satellite, and at some point decides to hand-over to a second satellite. In preparation for the handover, the first ES begins to transmit in parallel via both satellites. In particular, the first ES transmits a handover command and, after a certain time separation, a preamble comprising a synchronization signal.

The second ES has its receiver initially switched to receive via the first satellite. In response to receiving the handover command, the first ES switches its receiver to start receiving via the second satellite. After switching, the second ES acquires and locks on the signal received from the second satellite, using the preamble. The time separation between the handover command and the preamble is designed to allow the second ES sufficient time for switching between the satellites.

In some embodiments, the handover command also conveys parameters of the second satellite, in order to assist the second ES in synchronizing rapidly following the switch. Other disclosed embodiments relate to antenna steering in the two ESs before, during and after handover. Some implementation issues relating to the lengths of the various time intervals in the communication protocol, and to data buffering in the first ES, are also addressed.

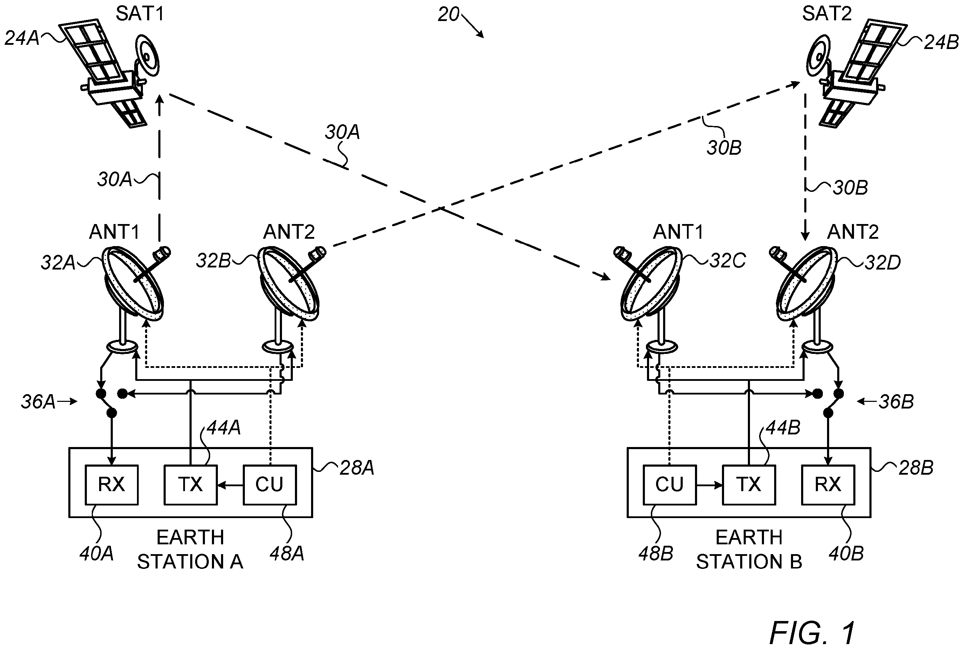

Fig. 1 is a block diagram that schematically illustrates a satellite communication system 20, in accordance with an embodiment of the present invention. System 20 uses non-geostationary satellites 24 for communicating between Earth Stations (ESs) 28. Satellites 24 may belong to any suitable satellite communication network such as, for example, Iridium, O3b, Globalstar, or any other suitable network. The satellites may follow any suitable orbit type, e.g., Low Earth Orbit (LEO) or Medium Earth Orbit (MEO).

The example of Fig. 1 shows two satellites 24A and 24B, respectively denoted SAT1 and SAT2, and two ESs 28A and 28B, respectively denoted ES-A and ES-B, for the sake of clarity. Real-life systems typically comprise a large number of satellites and ESs. ES-A and ES-B may carry out any suitable type of information via the satellites, e.g., voice, data, video, Internet access, to name only a few.

In the present example, ES-A plays the role of a transmitting ES, and ES-B plays the role of a receiving ES. Generally, however, any ES may serve as a transmitting ES, receiving ES, or both. The present example describes a unidirectional link from ES-A to ES-B, for the sake of clarity. Generally, however, ES-A and ES-B may conduct bidirectional communication with one another.

The embodiments described herein focus on a handover scheme from SAT1 to SAT2. Initially, ES-A transmits to ES-B via SAT1 over a path 30A. At a certain point in time, ES-A and ES-B switch in a coordinated manner to communicate via SAT2 over a path 30B. As will be explained below, the entire handover process, as well as communication before and after the handover, are conducted using a single receive modem in the receiving ES.

In the example of Fig. 1, ES-A comprises two antennas 32A and 32B, denoted ANT1 and ANT2, for communicating via SAT1 and SAT2, respectively. ES-A further comprises a receiver (RX) 40A for receiving signals from satellites and a transmitter (TX) 44A for transmitting signals to satellites. On transmission (at least around the handover time) the transmitted signal produced by TX 44A is split and transmitted simultaneously via both ANT1 and ANT2. On reception, a switch 36A switches the signal received by either ANT1 or ANT2 to RX 40A. A Control Unit (CU) 48A controls the various ES components and generally manages the ES operation. Among other tasks, CU 48A directs antennas ANT1 and ANT2 toward the appropriate satellites, and controls RX 40A, TX 44A and switch 36A.

ES-B typically has a similar structure to ES-A. In the present example ES-B comprises antennas 32C and 32D, denoted ANT1 and ANT2, for communicating via SAT1 and SAT2, respectively. ES-B further comprises a receiver (RX) 40B, a transmitter (TX) 44B, a switch 36B for selecting between ANT1 and ANT2 on reception, and a CU 48B.

The configurations of system 20 and ESs 28A and 28B shown in Fig. 1 are example configurations, which are chosen purely for the sake of conceptual clarity. In alternative embodiments, any other suitable system and/or ES configurations can be used. In the present context, the term "Earth Station" refers to any terrestrial communication unit that communicates via satellite, including both stationary and mobile or portable units.

The different elements of ESs 28A and 28B may be implemented using suitable hardware, e.g., using one or more Application-Specific Integrated Circuits (ASICs) or Field-Programmable Gate Arrays (FPGAs), using software, or using a combination of hardware and software elements.

In some embodiments, CUs 48A and 48B comprise general-purpose processors, which are programmed in software to carry out the functions described herein. The software may be downloaded to the processors in electronic form, over a network, for example, or it may, alternatively or additionally, be provided and/or stored on non-transitory tangible media, such as magnetic, optical, or electronic memory.

In a typical non-geostationary satellite network, satellites 24 orbit the earth in predefined non-geostationary orbits. From the point of view of a given ES, each satellite 24 occasionally rises above the horizon, moves across the horizon and sets. With proper coverage, at least one satellite, and typically more than one, should be visible to an ES at any given time.

In some embodiments, ESs 28 switch ("handover") from one satellite 24 to another in order to retain communication. Typically, CUs 48 have access to information regarding the satellite positions and parameters, and possibly to current received-signal parameters such as Signal-to-Noise Ratio (SNR). Using this information, the CUs are able to direct the ES
antennas to point toward the appropriate satellites, to predict when the currently-used satellite is about to set, to select a new satellite to switch to, and to initiate the handover process at the correct time. The entire process is performed using only a single RX modem in the receiving ES.

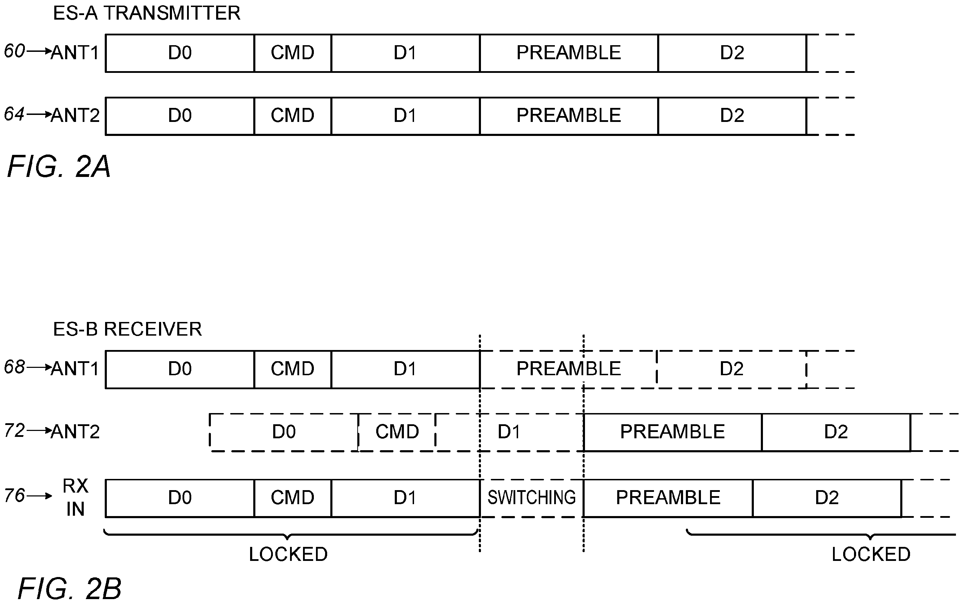

Figs. 2A and 2B are diagrams illustrating the signal streams in ES-A and ES-B shortly before, during and shortly after handover, in accordance with an embodiment of the present invention. Before the handover, as seen in Fig. 1, ES-A transmits to ES-B via SAT1 over path 30A, both ESs using ANT1. Following the handover, ES-A transmits to ES-B via SAT2 over path 30B, both ESs using ANT2.

Fig. 2A shows the transmitted signal streams produced by TX 44A of ES-A, in accordance with an embodiment of the present invention. As explained above, around the handover time ES-A transmits two replicas of the transmitted signal stream via ANT1 and ANT2. These signals are denoted in the figure by bars 60 and 64, respectively. Such simultaneous transmission is typically performed shortly before, during and possibly shortly after the handover. At other times, ES-A transmits to ES-B via a single antenna and a single satellite. The other antenna may be unused or used for other transmissions.

The transmitted signal stream comprises payload blocks denoted D0, D1, D2,..., a command (CMD) block and a preamble block. The payload blocks contain the data transmitted to ES-B, e.g., transport stream, data packets or any other suitable payload.

The CMD block is typically inserted by ES-A into the transmitted signal stream in preparation for handoff, and is not present at other times. The CMD block typically comprises a handover command that notifies ES-B of the approaching handover, plus one or more handoff parameters such as the time to switch and parameters of the new satellite. The time to switch may be specified, for example, in absolute time units, in terms of a number of symbols from the CMD block, or using any other suitable convention recognized by ES-B. The satellite parameters may comprise, for example, satellite identification, transmission frequency, expected latency, expected Doppler shift, and/or any other suitable parameter for facilitating acquisition of the new satellite signal.

The preamble block comprises a predefined synchronization signal waveform or sequence for enabling RX 40B of ES-B to acquire and lock to the received signal from the new satellite. Acquisition and lock typically involves acquisition of latency and sampling time, frequency offset and phase correction. The synchronization signal in the preamble block may comprise, for example, a Zadoff-Chu Constant Amplitude Zero Auto- Correlation (CAZAC) sequence or any other suitable synchronization signal.

In an embodiment, the preamble block does not immediately follow the CMD block, but is separated from the CMD block by at least one payload block (D1 in the present example). This time separation gives ES-B sufficient time to decode the CMD block and prepare for the handover.

Fig. 2B shows the signal streams received in ES-B, in accordance with an embodiment of the present invention. Bars 68 and 72 at the top of the figure illustrate the signals received by ANT1 (via SAT1 over path 30A) and ANT2 (via SAT2 over path 30B), respectively. Since paths 30A and 30B may differ in length, the signals received by ANT1 and ANT2 may be offset in time relative to one another. In a MEO network, for example, the time offset may be on the order of 20mS or more.

A bar 76 at the bottom of the figure shows the signal at RX 40B of ES-B before, during and after the switch from SAT1 to SAT2. Initially, CU 48B of ES-B sets switch 36B to ANT1, and thus RX 40B receives the signal from SAT1. At a certain point in time, CU 48B switches switch 36B to ANT2. The switching interval is denoted "switching" in the figure. During this interval RX 40B is not assumed to receive a signal from any of the antennas. Following the switching interval, RX 40B receives the signal from SAT2 via ANT2.

The relationship between the signals received by ANT1 and ANT2 (bars 68 and 72) and the signal provided to RX 40B is depicted in Fig. 2B using bold and dashed patterns. The signal portions that ultimately reach the receiver are marked as bold in bars 68 and 72, and the signal portions that do not reach the receiver are marked as dashed.

The time periods in which RX 40B is locked on the satellite signal are marked as "locked" in the figure. Before the handover and up to the beginning of the "switching" interval, RX 40B is locked on the signal from SAT1. After the "switching" interval, RX 40B receives at least part of the preamble block, and uses the synchronization signal to acquire and lock on the timing, frequency and phase of the signal from SAT2.

As can be seen in the figure, the time difference between transmission of the CMD block and transmission of the preamble block is typically designed such that the preamble block will be received by RX 40B immediately following the end of the "switching" interval. Moreover, it can be seen that RX 40B is fully locked on the satellite signal during the entire durations of payload blocks D0, D1, D2,... Therefore, the handover process is seamless and no data is lost.

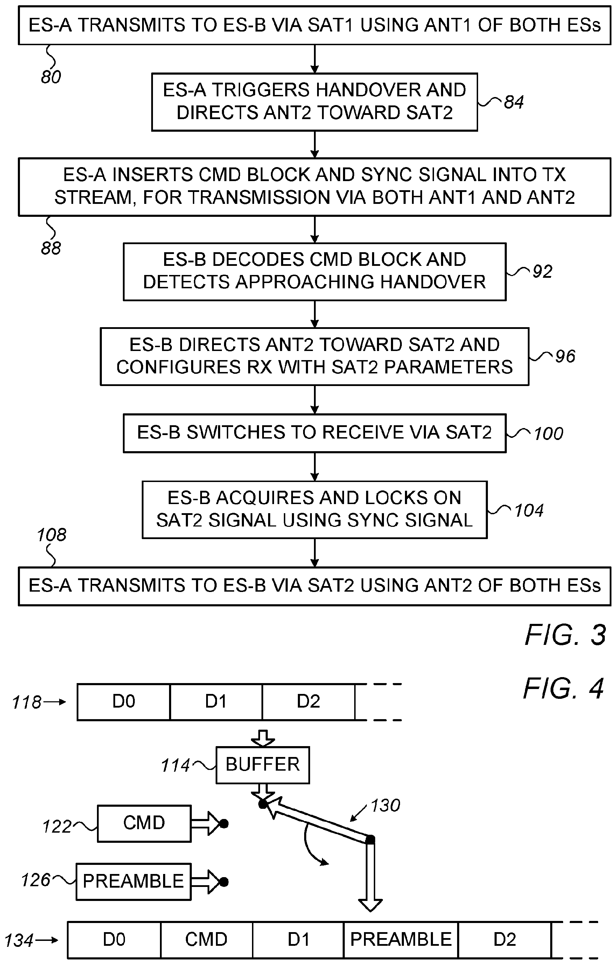

Fig. 3 is a flow chart that schematically illustrates a method for handover between satellites, in accordance with an embodiment of the present invention. The method begins with ES-A transmitting to ES-B via SAT1, at a pre-handoff communication step 80. At this stage, the ESs communicate over path 30A. Both ESs use ANT1 and point ANT1 toward SAT1.

At a certain point in time, CU 48A of ES-A triggers the handover process, at a handover triggering step 84. CU 48A may initiate handover, for example, in response to detecting that SAT1 is about to set and lose line-of-sight with ES-A, or for any other reason.

In preparation for the handover, CU 48A sends a handover command to TX 44A, notifies TX 44A of the parameters of the new satellite to switch to (SAT2), and directs ANT2 toward SAT2.

In response to the handover command, TX 44A of ES-A inserts the CMD and preamble blocks into the transmitted signal stream, at a handoff signal generation step 88. At this stage, TX 44A begins to transmit the transmitted signal stream simultaneously via both ANT1 and ANT2.

At this stage, ES-B still receives the signal from SAT1 via ANT1. RX 40B of ES-B decodes the CMD block and conveys the decoded block to CU 48B, at a CMD decoding step 92, and CU 48B detects the approaching handover.

In response to the handover command in the CMD block, ES-B prepares for the handover, at a handover preparation step 96. As part of the preparation, CU 48B directs ANT2 toward SAT2, and notifies RX 40B of the parameters of SAT2. The parameters of SAT2 may be obtained, for example, from satellite data stored in ES-B and/or from parameters received in the CMD block. RX 40B sets its timing, frequency and phase offset according to the expected SAT2 parameters.

At a switching step 100, CU 48B switches switch 36B from ANT1 to ANT2, so that RX 40B begins to receive the signal from SAT2 via ANT2. The timing, frequency and phase offsets in RX 40B are pre-tuned to the parameters of SAT2. At an acquisition step 104, RX 40B finds the preamble block in the received signal, and acquires and locks on to the signal from SAT2.

From this point onwards, the handover process is completed, and ES-A transmits to ES-B via SAT2, at a post-handoff communication step 108. The ESs communicate over path 30B, and both ESs use ANT2 and point ANT2 toward SAT2. ANT1 of ES-A is free for other suitable uses.

In some embodiments, the various time intervals in the disclosed communication protocol are designed to allow sufficient time for RX 40B to acquire and lock on the signal of the new satellite. The time intervals involved comprise the propagation delay difference between paths 30A and 30B (denoted Δ*τ*), the acquisition time needed for RX 40B to lock on the synchronization signal in the preamble block (denoted *τ_{acq}*), the switching time (denoted *τ_{sw}*, corresponding to the length of the "switching" interval in Fig. 2B), and the preamble length (denoted *τₚᵣₑ*).

In an example eight-satellite constellation, the propagation delay difference Δ*τ* may be up to 30mS. A typical acquisition time *τ_{acq}* (excluding the preamble) may be up to 10⁶ symbols, e.g., lOOmS for a symbol rate of 10Msps. Alternatively, any other suitable values can be used.

The switching time *τ_{sw}* typically comprises the settling time of the switch, as well as that of oscillators and other circuits in RX 40B. The acquisition time *τ_{acq}* typically comprises the time needed to achieve frequency lock (including center frequency and Doppler shift), as well as the time needed for timing lock.

The example of Fig. 2B shows a first possible scenario in which the received signal in ANT2 is delayed by Δ*τ* relative to the received signal in ANT1. In this scenario, RX 40B is able to start receiving the preamble block only after *max*{Δ*τ*, *τ_{sw}*}. Then, lock on the signal is achieved after *τ_{acq}*, and reception can begin within *τₚᵣₑ* - *τ_{acq}.* The preamble block should be longer than *τ_{sw}* + *τ_{acq}* in order to provide RX 40B sufficient acquisition time.

In a second possible scenario, the received signal in ANT2 precedes the received signal in ANT1. In this scenario, switching from ANT1 to ANT2 occurs within the preamble block of the signal received via ANT2. In order to provide RX 40B sufficient acquisition time in this scenario, the length of the preamble block should be at least *τₚᵣₑ* = *max*{*Δτ*} + *τ_{sw}* + *τ_{acq}*. This preamble length is the length to be used, in an embodiment, since it represents the worst-case between the two scenarios. This preamble length also corresponds to the buffer size that should be used for storing the transmitted signal stream in TX 44A of ES-A to allow for insertion of the preamble block.

The maximal latency expected from the beginning of the switching interval until RX 40B resumes data decoding is *τₗₐₜ* = *max*{Δ*τ*, *τ_{sw}*} + *τₚᵣₑ* for the first scenario, and *τₗₐₜ* = *τₚᵣₑ* for the second scenario.

Fig. 4 is a block diagram that schematically illustrates buffering of the transmitted signal stream in TX 44A of ES-A, in accordance with an embodiment of the present invention. In this example, a First-In First-Out (FIFO) memory buffer 114 in TX 44A buffers an input stream 118 of payload blocks D0, D1, D2,.... When preparing for handover, TX 44A inserts a predefined command block 122 and a predefined preamble block 126 into the data stream read from buffer 114 using a multiplexer 130. The resulting signal stream, denoted 134, is transmitted via ANT1 and ANT2 as shown in Fig. 2A above.

Typically, input stream 118 is written into buffer 114 at the input symbol rate. The buffer is read at a rate that is higher than the input symbol rate by a factor of (*T_{NHO}* + *T_{CMD}* + *T_{PRE}*), wherein *T_{NHO}* denotes the time between handovers, *T_{CMD}* denotes the length of the CMD block, and *T_{PRE}* denotes the length of the preamble block. This higher rate enables TX 44B to insert CMD block 122 and preamble block 126 at the appropriate times.

The switching and acquisition times described above have a direct impact on the size of buffer 114 and on the overall system latency, and should therefore be reduced as much as possible. The acquisition time of RX 40B can be reduced, for example, by using *a-priori* information regarding the new satellite before handover. Such information can be stored in ES-A and sent to ES-B in the CMD block, accumulated at ES-B during operation, and/or computed according to the known satellite data. A-priori information may comprise, for example, the center frequency of the new satellite, expected Doppler shift, clock synchronization shifts if applicable, timing and delay information, and/or any other suitable information.

Although the embodiments described herein mainly address non-geostationary satellite networks, the methods and systems described herein can also be used in other applications, such as in handover between geostationary satellites.

Additionally or alternatively, the disclosed techniques can be used in non-stationary ESs, e.g., in satellite terminals installed in aircraft. In such a moving terminal, the disclosed techniques can be used for handover between satellites, as well as for handover between spot beams (usually on different frequencies) on the same satellite.

In yet another embodiment, the disclosed techniques can also be implemented using a single antenna per ES. This sort of implementation would typically require a larger buffer size, a longer preamble, and means for compensating for the possible delays and antenna movement.

It will thus be appreciated that the embodiments described above are cited by way of example, and that the present invention is not limited to what has been particularly shown and described here above.

Rather, the present disclosure includes both combinations and sub-combinations of the various features described hereinabove, as well as variations and modifications thereof which would occur to persons skilled in the art upon reading the foregoing description and which are not disclosed in the prior art.

## Claims

1. A method for communication, comprising:
in a first earth station (28A) that transmits signals to a second earth station (28B) via a first satellite (24A), initiating a handover from the first satellite to a second satellite (24B) by transmitting the signals via both the first satellite and the second satellite, including transmitting a handover command (CMD) and a synchronization signal (PREAMBLE); and
in the second earth station, receiving the handover command via the first satellite and, in response to the handover command, switching to receive the signals via the second satellite and synchronizing to the signal received via the second satellite using the synchronization signal;
**characterized in that** transmitting the signals comprises buffering payload data in a memory buffer and, in preparation for the handover, generating the signals for transmission by interleaving the buffered payload data, the handover command and the synchronization signal.

2. The method according to claim 1, wherein receiving the signals, the handover command and the synchronization signal in the second earth station are performed by a single receive modem, which receives the signals via no more than one of the first and second satellites at any given time.

3. The method according to claim 1, wherein transmitting the signals comprises transmitting the handover command and the synchronization signal with a time separation therebetween, and wherein switching to receive the signals via the second satellite is performed in the second earth station during the time separation, so as to receive the synchronization signal via the second satellite after the switching.

4. The method according to any of claims 1-3, wherein transmitting the handover command comprises reporting one or more parameters of the second satellite, and wherein synchronizing to the signal received via the second satellite comprises acquiring the synchronization signal using the reported parameters.

5. The method according to claim 4, wherein the reported parameters comprise at least one parameter type selected from a group of types consisting of an identifier, a timing offset, a center frequency, a frequency offset and a phase offset relating to the second satellite.

6. The method according to any of claims 1-3, wherein transmitting the handover command comprises indicating to the second earth station a time at which to switch to receive the signals via the second satellite.

7. The method according to any of claims 1-3, and comprising directing an antenna of the second earth station toward the second satellite in response to the handover command.

8. A communication system (20), comprising:
a first earth station (28A), which is configured to transmit signals via a first satellite (24A), and to initiate a handover from the first satellite to a second satellite (24B) by transmitting the signals via both the first satellite and the second satellite, including transmitting a handover command (CMD) and a synchronization signal (PREAMBLE); and
a second earth station (28B), which is configured to receive the handover command via the first satellite and, in response to the handover command, to switch to receive the signals via the second satellite and to synchronize to the signal received via the second satellite using the synchronization signal;
**characterized in that** the first earth station is configured to buffer payload data in a memory buffer and, in preparation for the handover, to generate the signals for transmission by interleaving the buffered payload data, the handover command and the synchronization signal.

9. The system according to claim 8, wherein the second earth station is configured to receive the signals, the handover command and the synchronization signal by receiving no more than one of the first and second satellites at any given time.

10. The system according to claim 8, wherein the first earth station is configured to transmit the handover command and the synchronization signal with a time separation therebetween, and wherein the second earth station is configured to switch to receive the signals via the second satellite during the time separation, so as to receive the synchronization signal via the second satellite after the switching.

11. The system according to any of claims 8-10, wherein the first earth station is configured to report in the handover command one or more parameters of the second satellite, and wherein the second earth station is configured to acquire the synchronization signal via the second satellite using the reported parameters.

12. The system according to any of claims 8-10, wherein the first earth station is configured to indicate to the second earth station in the handover command a time at which to switch to receive the signals via the second satellite.

13. The system according to any of claims 8-10, wherein the second earth station is configured to direct an antenna of the second earth station toward the second satellite in response to the handover command.

## Patentansprüche

1. Verfahren zur Kommunikation, umfassend:
Einleiten, in einer ersten Bodenstation (28A), die Signale über einen ersten Satelliten (24A) an eine zweite Bodenstation (28B) sendet, einer Verbindungsübergabe von dem ersten Satelliten an einen zweiten Satelliten (24B) durch Senden der Signale sowohl über den ersten Satelliten als auch über den zweiten Satelliten, umfassend das Senden eines Verbindungsübergabebefehls (CMD) und eines Synchronisationssignals (PREAMBLE); und
Empfangen, in der zweiten Bodenstation, des Verbindungsübergabebefehls über den ersten Satelliten und, als Reaktion auf den Verbindungsübergabebefehl, Umschalten auf den Empfang der Signale über den zweiten Satelliten und Synchronisieren mit dem über den zweiten Satelliten empfangene Signal unter Verwendung des Synchronisationssignals;
**dadurch gekennzeichnet, dass** das Senden der Signale das Puffern von Nutzdaten in einem Speicherpuffer und, in Vorbereitung auf die Verbindungsübergabe, das Erzeugen der zu sendenden Signale durch Interleaving der gepufferten Nutzdaten, des Verbindungsübergabebefehls und des Synchronisationssignals umfasst.

2. Verfahren nach Anspruch 1, wobei das Empfangen der Signale, des Verbindungsübergabebefehls und des Synchronisationssignals in der zweiten Bodenstation von einem einzigen Empfangsmodem durchgeführt wird, das die Signale über nicht mehr als einen von dem ersten und zweiten Satelliten zu einem bestimmten Zeitpunkt empfängt.

3. Verfahren nach Anspruch 1, wobei das Senden der Signale das Senden des Verbindungsübergabebefehls und des Synchronisationssignals mit einer dazwischenliegenden zeitlichen Trennung umfasst, und wobei das Umschalten zum Empfangen der Signale über den zweiten Satelliten in der zweiten Bodenstation während der zeitlichen Trennung durchgeführt wird, um das Synchronisationssignal über den zweiten Satelliten nach dem Umschalten zu empfangen.

4. Verfahren nach einem der Ansprüche 1-3, wobei das Senden des Verbindungsübergabebefehls das Melden von einem oder mehreren Parametern des zweiten Satelliten umfasst, und wobei das Synchronisieren mit dem über den zweiten Satelliten empfangenen Signal das Erfassen des Synchronisationssignals unter Verwendung der gemeldeten Parameter umfasst.

5. Verfahren nach Anspruch 4, wobei die gemeldeten Parameter mindestens einen Parametertyp umfassen, der aus einer Gruppe von Typen ausgewählt ist, die aus einem Identifikator, einem Zeitversatz, einer Mittenfrequenz, einem Frequenzversatz und einem Phasenversatz in Bezug auf den zweiten Satelliten besteht.

6. Verfahren nach einem der Ansprüche 1-3, wobei das Senden des Verbindungsübergabebefehls umfasst, der zweiten Bodenstation eine Zeit anzuzeigen, zu der die Umschaltung zum Empfangen der Signale über den zweiten Satelliten erfolgen soll.

7. Verfahren nach einem der Ansprüche 1-3, umfassend das Richten einer Antenne der zweiten Bodenstation auf den zweiten Satelliten als Reaktion auf den Verbindungsübergabebefehl.

8. Kommunikationssystem (20), umfassend:
eine erste Bodenstation (28A), die dazu konfiguriert ist, Signale über einen ersten Satelliten (24A) zu senden und eine Verbindungsübergabe von dem ersten Satelliten an einen zweiten Satelliten (24B) einzuleiten, indem die Signale sowohl über den ersten Satelliten als auch über den zweiten Satelliten gesendet werden, umfassend das Senden eines Verbindungsübergabebefehls (CMD) und eines Synchronisationssignals (PREAMBLE); und
eine zweite Bodenstation (28B), die dazu konfiguriert ist, den Verbindungsübergabebefehl über den ersten Satelliten zu empfangen und als Reaktion auf den Verbindungsübergabebefehl umzuschalten, um die Signale über den zweiten Satelliten zu empfangen und mit dem über den zweiten Satelliten empfangenen Signal unter Verwendung des Synchronisationssignals zu synchronisieren;
**dadurch gekennzeichnet, dass** die erste Bodenstation dazu konfiguriert ist, Nutzdaten in einem Speicherpuffer zu puffern und, in Vorbereitung auf die Verbindungsübergabe, die zu sendenden Signale durch Interleaving der gepufferten Nutzdaten, des Verbindungsübergabebefehls und des Synchronisationssignals zu erzeugen.

9. System nach Anspruch 8, wobei die zweite Bodenstation dazu konfiguriert ist, die Signale, den Verbindungsübergabebefehl und das Synchronisationssignal zu empfangen, indem sie nicht mehr als einen von dem ersten und zweiten Satelliten zu einem bestimmten Zeitpunkt empfängt.

10. System nach Anspruch 8, wobei die erste Bodenstation dazu konfiguriert ist, den Verbindungsübergabebefehl und das Synchronisationssignal mit einer dazwischenliegenden Zeittrennung zu senden, und wobei die zweite Bodenstation dazu konfiguriert ist, umzuschalten, um die Signale über den zweiten Satelliten während der Zeittrennung zu empfangen, um das Synchronisationssignal über den zweiten Satelliten nach dem Umschalten zu empfangen.

11. System nach einem der Ansprüche 8-10, wobei die erste Bodenstation dazu konfiguriert ist, in dem Verbindungsübergabebefehl einen oder mehrere Parameter des zweiten Satelliten zu melden, und wobei die zweite Bodenstation dazu konfiguriert ist, das Synchronisationssignal über den zweiten Satelliten unter Verwendung der gemeldeten Parameter zu erfassen.

12. System nach einem der Ansprüche 8-10, wobei die erste Bodenstation dazu konfiguriert ist, der zweiten Bodenstation in dem Verbindungsübergabebefehl eine Zeit anzuzeigen, zu der sie umschalten soll, um die Signale über den zweiten Satelliten zu empfangen.

13. System nach einem der Ansprüche 8-10, wobei die zweite Bodenstation dazu konfiguriert ist, als Reaktion auf den Verbindungsübergabebefehl eine Antenne der zweiten Bodenstation auf den zweiten Satelliten zu richten.

## Revendications

1. Procédé de communication, comprenant :
dans une première station terrestre (28A) qui émet des signaux à une seconde station terrestre (28B) par l'intermédiaire d'un premier satellite (24A), initier un transfert intercellulaire du premier satellite au second satellite (24B) par émission des signaux par l'intermédiaire à la fois du premier satellite et du second satellite, comprenant l'émission d'une instruction de transfert intercellulaire (CMD) et d'un signal de synchronisation (PREAMBLE) ; et
dans la seconde station terrestre, recevoir l'instruction de transfert intercellulaire par l'intermédiaire du premier satellite et, en réponse à l'instruction de transfert intercellulaire, commuter pour recevoir les signaux par l'intermédiaire du second satellite et se synchroniser sur le signal reçu par l'intermédiaire du second satellite en utilisant le signal de synchronisation ;
**caractérisé en ce que** l'émission des signaux comprend la mise en mémoire tampon de données utiles dans une mémoire tampon et, en préparation pour le transfert intercellulaire, générer les signaux pour une émission par entrelacement des données utiles mises en mémoire tampon, de l'instruction de transfert intercellulaire et du signal de synchronisation.

2. Procédé selon la revendication 1, dans lequel les réceptions des signaux, de l'instruction de transfert intercellulaire et du signal de synchronisation dans la seconde station terrestre sont effectuées par un modem de réception unique, qui reçoit les signaux par l'intermédiaire de pas plus qu'un des premier et second satellites à un quelconque temps donné.

3. Procédé selon la revendication 1, dans lequel l'émission des signaux comprend l'émission de l'instruction de transfert intercellulaire et du signal de synchronisation avec une séparation temporelle entre eux, et dans lequel la commutation pour recevoir les signaux par l'intermédiaire du second satellite est effectuée dans la seconde station terrestre pendant la séparation temporelle, de façon à recevoir le signal de synchronisation par l'intermédiaire du second satellite après la commutation.

4. Procédé selon l'une quelconque des revendications 1 à 3, dans lequel l'émission de l'instruction de transfert intercellulaire comprend le rapport d'un ou plusieurs paramètres du second satellite, et dans lequel la synchronisation sur le signal reçu par l'intermédiaire du second satellite comprend l'acquisition du signal de synchronisation à l'aide des paramètres rapportés.

5. Procédé selon la revendication 4, dans lequel les paramètres rapportés comprennent au moins un type de paramètres sélectionné parmi un groupe de types consistant en un identifiant, un décalage temporel, une fréquence centrale, un décalage de fréquence et un décalage de phase concernant le second satellite.

6. Procédé selon l'une quelconque des revendications 1 à 3, dans lequel l'émission de l'instruction de transfert intercellulaire comprend l'indication à la seconde station terrestre d'un temps auquel commuter pour recevoir les signaux par l'intermédiaire du second satellite.

7. Procédé selon l'une quelconque des revendications 1 à 3, et comprenant diriger une antenne de la seconde station terrestre vers le second satellite en réponse à l'instruction de transfert intercellulaire.

8. Système de communication (20), comprenant :
une première station terrestre (28A), qui est configurée pour émettre des signaux par l'intermédiaire d'un premier satellite (24A), et pour initier un transfert intercellulaire du premier satellite à un second satellite (24B) par émission des signaux par l'intermédiaire à la fois du premier satellite et du second satellite, comprenant l'émission d'une instruction de transfert intercellulaire (CMD) et d'un signal de synchronisation (PREAMBLE) ; et
une seconde station terrestre (28B), qui est configurée pour recevoir l'instruction de transfert intercellulaire par l'intermédiaire du premier satellite et, en réponse à l'instruction de transfert intercellulaire, pour commuter pour recevoir les signaux par l'intermédiaire du second satellite et pour se synchroniser sur le signal reçu par l'intermédiaire du second satellite en utilisant le signal de synchronisation ;
**caractérisé en ce que** la première station terrestre est configurée pour mettre en mémoire tampon des données utiles dans une mémoire tampon et, en préparation pour le transfert intercellulaire, pour générer les signaux pour une émission par entrelacement des données utiles mises en mémoire tampon, de l'instruction de transfert intercellulaire et du signal de synchronisation.

9. Système selon la revendication 8, dans lequel la seconde station terrestre est configurée pour recevoir les signaux, l'instruction de transfert intercellulaire et le signal de synchronisation par réception de pas plus qu'un des premier et second satellites à un quelconque temps donné.

10. Système selon la revendication 8, dans lequel la première station terrestre est configurée pour émettre l'instruction de transfert intercellulaire et le signal de synchronisation avec une séparation temporelle entre eux, et dans lequel la seconde station terrestre est configurée pour commuter pour recevoir les signaux par l'intermédiaire du second satellite pendant la séparation temporelle, de façon à recevoir le signal de synchronisation par l'intermédiaire du second satellite après la commutation.

11. Système selon l'une quelconque des revendications 8 à 10, dans lequel la première station terrestre est configurée pour rapporter dans l'instruction de transfert intercellulaire un ou plusieurs paramètres du second satellite, et dans lequel la seconde station terrestre est configurée pour acquérir le signal de synchronisation par l'intermédiaire du second satellite à l'aide des paramètres rapportés.

12. Système selon l'une quelconque des revendications 8 à 10, dans lequel la première station terrestre est configurée pour indiquer à la seconde station terrestre dans l'instruction de transfert intercellulaire un temps auquel commuter pour recevoir les signaux par l'intermédiaire du second satellite.

13. Système selon l'une quelconque des revendications 8 à 10, dans lequel la seconde station terrestre est configurée pour diriger une antenne de la seconde station terrestre vers le second satellite en réponse à l'instruction de transfert intercellulaire.
